(19) **Europäisches Patentamt**
**European Patent Office**
**Office européen des brevets**

(11) **EP 1 693 387 B1**

(12) **EUROPEAN PATENT SPECIFICATION**

(45) Date of publication and mention
of the grant of the patent:
**20.06.2012 Bulletin 2012/25**

(51) Int Cl.:
*G01N 33/543* (2006.01)     *C12Q 1/68* (2006.01)
*C08F 220/32* (2006.01)     *C08F 8/30* (2006.01)

(21) Application number: **06007361.6**

(22) Date of filing: **28.04.2004**

(54) **Process for preparing coated magnetic particles**

Verfahren zur Herstellung beschichteter Magnetteilchen

Procédé de préparation de particules magnétiques revêtues

(84) Designated Contracting States:
**AT BE BG CH CY CZ DE DK EE ES FI FR GB GR HU IE IT LI LU MC NL PL PT RO SE SI SK TR**

(30) Priority: **17.07.2003 US 488020 P**

(43) Date of publication of application:
**23.08.2006 Bulletin 2006/34**

(62) Document number(s) of the earlier application(s) in accordance with Art. 76 EPC:
**04729912.8 / 1 649 284**

(73) Proprietor: **Invitrogen Dynal AS**
**0309 Oslo (NO)**

(72) Inventors:
• **Fonnum, Geir**
**1472 Fjellhamar (NO)**
• **Hofsløkken, Nini Kjus**
**0679 Oslo (NO)**
• **Aksnes, Elin**
**0679 Oslo (NO)**
• **Kilaas, Lars**
**7014 Trondheim (NO)**
• **Stenstad, Per**
**7024 Trondheim (NO)**
• **Schmid, Ruth**
**7091 Tiller (NO)**
• **Bjørgum, Jon Olav**
**7089 Heimdal (NO)**
• **Nilsen, Tom-Nils**
**7053 Ranheim (NO)**
• **Berge, Arvid Trygve**
**7052 Trondheim (NO)**

(74) Representative: **Wöhler, Christian et al**
**Life Technologies**
**Frankfurter Straße 129 B**
**64293 Darmstadt (DE)**

(56) References cited:
WO-A-89/04373     WO-A-90/10696
WO-A-96/40502     WO-A-2004/053490
US-A- 4 054 452     US-A- 4 352 884
US-A- 4 654 267     US-A- 4 827 945
US-A- 5 091 206     US-A- 6 133 047

• **DATABASE WPI Section Ch, Week 197523 Derwent Publications Ltd., London, GB; Class A23, AN 1975-38299W XP002299991 & JP 49 110402 A (ASAHI CHEM IND CO LTD) 21 October 1974 (1974-10-21)**

Remarks:
The file contains technical information submitted after the application was filed and not included in this specification

**Description**

This invention relates to a process for the preparation of coated magnetic polymer particles.

Magnetic polymer particles are of general utility in various medical and biochemical fields, for example as transport vehicles for the delivery of pharmaceutical products, for diagnostic purposes, for separation and for synthetic purposes. Such particles rely upon their magnetic properties in order to perform these functions. In diagnostic assay applications, for example, application of a magnetic field to a sample containing an analyte bound to magnetic polymer particles allows the isolation of the analyte without the use of centrifugation or filtration and in therapeutic applications, for example, application of a magnetic field to the patient may serve to target drug-carrying magnetic polymer particles to a desired body site.

By magnetic is meant herein that the polymer particles contain superparamagnetic crystals. Thus the magnetic polymer particles are magnetically displaceable but are not permanently magnetizable. Many processes for preparing magnetic polymer particles are known, a large number of which involve preparing maghemite- or magnetite-containing polymer particles from pre-formed magnetic iron oxides, e.g. magnetite. Some of processes involved are described in US-A-4,654,267 (Ugelstad).

Thus US-A-4,654,267 outlines a number of limitations with regard to the processes which preceded it; these include difficulty in obtaining magnetic particles of similar size and/or of homogeneous or uniform magnetic properties, as well as a more general problem relating to the difficulty of incorporating magnetic material inside the cavities of porous polymer particles.

With deposition taking place principally on the surface, or in large open cavities, leaching of magnetic particles, which shortens the useful lifetime of magnetic polymer particles in the applications to which they are put, was consequently problematic.

In order to overcome these disadvantages, US-A-4,654,267 proposed a preparative method whereby, in its simplest form, porous polymer particles are impregnated with solutions of iron compounds whereafter the iron is precipitated, for instance by raising the pH value. The precipitated iron compounds may then be converted to superparamagnetic Iron oxide crystals by heating.

To produce porous magnetic polymer particles having magnetic material disposed within the polymer pores, US-A-4,654,267 advocated the use of porous polymer particles having surface functional groups which serve to draw the iron ions into the polymer particles. These functional groups could either result from the use of functionalized comonomers in the production of the polymer or from post-polymerization treatment of the polymer to introduce the functional groups, e.g. by coupling to or transformation of existing groups on the polymer surface. The US patent teaches that epoxy groups may be used as reactive functional groups in attaching iron-binding functionalities to the polymer particles, e.g. in attaching ethylene diamine or an ethylene oxide-containing compound.

US-A-5091206 discloses a process of producing magnetically responsive polymer particles comprising polymeric core particles coated evenly with a layer of polymer containing magnetically responsive metal oxide. The metal oxide is mixed with monomer and coated onto polymeric core particles. The magnetic particles are then coated with a protective layer of polymer, preferably polystyrene, to prevent the metal oxide falling off. If functionalised magnetic particles are desired, the particles can be coated with another layer of functionalised polymer. Glycidyl methacrylate is mentioned in a list of functionalised monomers which may be used for this purpose.

US-A-6133047 discloses superparamagnetic polymer particles comprising a core of a first polymer, an internal layer of a second polymer coating the core and in which a magnetic material is distributed, and an external layer of a third polymer coating the magnetic layer and capable of interacting with at least one biological molecule. The third polymer is selected from hydrophilic polymers, in particular acrylamide derivatives.

WO 2004/053490 is prior art within the meaning of Art. 54(3) EPC and discloses coated magnetic particles comprising an optionally porous magnetic polymer particle having on its surface and/or in pores thereof superparamagnetic crystals, the particles having a coat formed from a coating polymer and being essentially non-autofluorescent. Epoxides containing at least one ether link and optionally an alkylene chain are mentioned as monomers for reacting with the polymer particles to form a coating.

US-A-2002/0169293 discloses microspheres comprising styrene-glycidyl methacrylate polymer having a functional glycidyl group projecting on its surface. The microsphere may be reacted with a spacer compound to form a particle which may be reacted with a physiologically active substance. The spacer compound may be ethylene glycol diglycidyl ether.

Whilst the invention disclosed in US-A-654,267 does in part solve the problem of producing magnetic polymer particles which have more homogeneous magnetic properties, the problem of leaching of the superparamagnetic crystals from the polymer particles remains.

We have now surprisingly discovered that for particles of a certain size, this problem may be solved and magnetic particles with a particularly suitable surface characteristics may be produced by reacting surface functionalized, magnetic polymer particles with epoxide monomers to produce a "coated" magnetic polymer particle.

Viewed from a first aspect, therefore, the present invention provides a process for the preparation of coated polymer particles containing superparamagnetic crystals, said process comprising reacting porous, surface-functionalized, superparamagnetic crystal containing polymer particles of diameter 0.5 to 1.8 $\mu$m, more preferably of diameter 0.75 to 1.2 $\mu$m, especially approximately 1 $\mu$m, with at least one, preferably at least two epoxide compounds. The process uses an epoxide containing at least one ether link and a phenyl or bisphenyl group.

The porous polymer particles used in the process of the invention may be any porous polymer having a functionalized surface, e.g. as described in US-A-4,654,267.

The surface functionality on the polymer is a group capable, optionally with activation, of reacting with an epoxide to covalently bond the epoxide to the surface. Most preferably the surface is amine functionalized.

The polymer is preferably made from combinations of vinylic polymers, e.g. styrenes, acrylates and/or methacrylates. The polymeric material may optionally be crosslinked, for example by incorporation of cross-linking agents, for example as comonomers, e.g. divinylbenzene (DVB) or ethyleneglycol dimethacrylate. Particles comprising DVB are preferred.

Appropriate quantities of the cross-linking agents (e.g. comonomers) required will be well known to the skilled man. Preferably the polymer is a cross-linked styrenic polymer (e.g. a styrene-divinylbenzene polymer, which may be surface functionalized by the use of a nitro-group containing comonomer, e.g. nitro-styrene, and subsequent reduction) or a cross-linked (meth)acrylic polymer surface functionalized by the use of an epoxy-group containing comonomer (e.g. glycidylmethacrylate) and subsequent amination (e.g. by reaction with ethylene diamine).

The superparamagnetic crystals in the polymer particles used in the process of the invention may be of any material capable of being deposited in superparamagnetic crystalline form in the porous polymer particles. Magnetic iron oxides, e.g. magnetite or maghemite are preferred; however the crystals may be of mixed metal oxides or other magnetic material if desired. The total quantity of crystalline magnetic material present is generally more than 1%, preferably more than 3%, desirably more than or equal to 5% (by weight, e.g. up to 40% wt. The percentage is calculated on a Fe (or equivalent metal in the case of magnetic materials other than iron oxides) weight basis based upon the overall dry weight of the coated particles.

Polymer particles according to the present invention will have sizes (i.e. diameters) that are generally in the range 0.5 to 1.8 $\mu$m, e.g 0,75 to 1.2 $\mu$m, preferably 0.9 to 1.1 $\mu$m.

Typically the porous particles used will have a surface area of at least 15 m$^2$/g (measured by the BET nitrogen absorption method), and more preferably at least 30 m$^2$/g, e.g. up to 700 m$^2$/g, when corrected to a mean particle diameter of 2.7 $\mu$m (i.e. multiply surface area by 2.7/MD, where MD is the mean diameter in micrometers). Similarly scaled, the particle pore volume is preferably at least 0.1 mL/g.

Typically, the polymer particles are spherical and substantially monodisperse before they are coated and especially preferably remain spherical and substantially monodisperse once they have been coated.

By substantially monodisperse it is meant that for a plurality of particles (e.g. at least 100, more preferably at least 1000) the particles have a coefficient of variation (CV) of less than 20%, for example less than 15%, preferably less than 12%, more preferably less than 11%, still more preferably less than 10% and most preferably no more than about 8%, e.g. 2 to 5%. CV is determined in percentage as

$$CV = \frac{100 \times standard\ deviation}{mean}$$

where mean is the mean particle diameter and standard deviation is the standard deviation in particle size. CV is preferably calculated on the main mode, i.e. by fitting a monomodal distribution curve to the detected particle size distribution. Thus some particles below or above mode size may be discounted in the calculation which may for example be based on about 90% of total particle number (of detectable particles that is). Such a determination of CV is performable on a Coulter LS 130 particle size analyzer.

Of particular utility in the present invention are polymeric particles disclosed in WO 99/19375 (Dyno Industrier ASA), WO 00/61648 (Dyno Specialty Polymers AS) made in part from amino styrene as disclosed in WO 01/70825.

Alternatively, in contrast to the disclosure of WO01/70825, functionalisation of the polymeric material may take place after polymerisation by, for example, nitration and subsequent reduction of the thus-formed nitro groups to pendant amine groups; or direct amination, for example by treatment with amino ethanol. As further alternatives, polymeric particles prepared by the well-known Ugelstad two-step swelling process and the improvements thereto disclosed in WO 00/61647 (Dyno) may be used. Also of use here are polymeric particles prepared by the processes disclosed in WO99/19375 and WO00/61648. Porous polymer particles produced according to the processes described in these publications may have magnetic particles deposited in their pores by standard techniques, e.g. as described above. As a further possibility, porous polymer particles may be prepared from nitro styrene and DVB, and magnetic material introduced as taught in US-A-4,654,267. Of all these processes, the use of amino styrene, particularly 4-aminostyrene, as monomer or comonomer in the preparation of amino-bearing polymeric material is preferred. Use of this monomer or comonomer obviates the need for post-polymerisation nitration and reduction reactions. Moreover, the more predictable nature (homogeneity) of the coating afforded by this process permits a more reliable coating to be applied.

The reaction of the porous magnetic polymer particle with the epoxides generates a polymer within the pores of the polymer particles which serves essentially to block these pores physically encapsulating the superparamagnetic crystals within the polymer particles. The resulting "coated" particles then have reduced porosity relative to the porous starting material. Surprisingly we have found that the superparamagnetic crystals appear to catalyse the polymerization so that the coating forms preferentially in their vicinity.

If desired, an epoxide polymer coating may be cross-linked, e.g. by use of an isocyanate or diisocyanate in known fashion. Equally if desired further materials may be impregnated into the porous particles either before the coating polymerization reaction or after coating polymerization but before coating polymer cross-linking. Typically such further materials will be radiation emitters or absorbers, e.g. chromophores, fluorophores or radioactively labelled materials.

The particles may be reacted with a single epoxide to form the coating.

However, in a preferred embodiment, the porous polymer particles are reacted with a mixture of epoxides, e.g. 2-6 epoxides, especially 2, 3 or 4 epoxides. Of these, diepoxides or polyepoxides preferably constitute at least 30 mole %, more preferably at least 45 mole %.

The epoxide compounds used according to the invention preferably comprise at least one diepoxide, e.g. a combination of two diepoxides or of a monoepoxide and a diepoxide. An epoxide contains at least one ether link and a phenyl or bisphenyl group. Generally, the epoxides will have a carbon atom content of from 3 to 50, preferably 3 to 25.

Typical epoxides that may be used include epichlorohydrin, epibromohydrin, isopropylglycidyl ether, butyl glycidyl ether, allylglycidyl ether, 1,4-butanediol diglycidyl ether (1,4-bis(2,3-epoxypropoxy) butane), neopentylglycol diglycidyl ether, ethylene glycol diglycidyl ether, polyethylene glycol diglycidyl ether (e.g. of Mw 150 to 1000 g/mol), glycerol diglycidyl ether, glycerolpropoxylate triglycidylether, glycidol, glycidyl methacrylate, and epoxides based on bisphenol A or bisphenol F, e.g. 2,2-bis(4-(2,3-epoxypropoxy)phenyl)-propane.

In particular, the epoxides sold under the trade name Araldite LY-564 are favoured (a mixture of 2,2-bis(4-(2,3-epoxypropoxy)phenyl)-propane and 1,4-butanediol diglycidyl ether).

It is within the scope of the invention for a first coating reaction to be carried out using a single epoxide and a secondary coating reaction to be carried out using a mixture of at least two epoxides.

Typically therefore, the coating reaction may be effected by impregnating the porous magnetic polymer particle with the epoxides , e.g. using a solution of these (for example in an organic solvent such as methanol or diglyme) or by mixing a dispersion of the porous particles in an organic solvent with a liquid epoxide. Sonication may be used to improve impregnation and the reaction may be accelerated by raising the temperature, e.g. to 50-100°C. Any solvent used may be extracted by application of sub-ambient pressure.

Generally, the uses to which magnetic polymer particles are put, e.g. their use as diagnostic tools, require an appropriate degree of electrophilicity in order that they may participate adequately in coupling and other reactions in aqueous systems prevalent in biological media.

Whilst the general polarity of the coatings is desirably electrophilic, certain coatings which contain hydrophobic moieties may be incorporated so as to tailor the degree of electrophilicity to that which is desired. In this way, the invention permits the provision of useful diagnostic and other tools having a wide range of polarities.

If desired, in the process of the invention, the surfaces of the coated magnetic polymer particles may be further functionalised, e.g. by coupling a drug molecule, a reporter label (e.g. a chromophore, fluorophore, enzyme or radiolabel), or a ligand (e.g. an antibody or antibody fragment, a metal ion complexing agent, a member of a specific binding partner pair (e.g. biotin or streptavidin), an oligopeptide, an oligonucleotide, or an oligosaccharide).

Such coupling may be direct or indirect (and so may or may not involve the use of a coupling agent to form a linkage between the particle and the substance being coupled to it) and may be biodegradable or non-biodegradable. Biodegradable couplings may be desired if the magnetic polymer particles are to be used for the targeted release of an active compound. Accordingly after coating has been effected, the pendent groups of the coating may be manipulated to provide appropriate functionality (for example epoxy, hydroxy, amino etc. functionalities) for the attachment of such substances.

The functionalised coated magnetic particle may be bound to an affinity ligand the nature of which will be selected based on its affinity for a particular analyte whose presence or absence in a sample is to be ascertained. The affinity molecule may therefore comprise any molecule capable of being linked to a magnetic probe which is also capable of specific recognition of a particular analyte. Affinity ligands therefore include monoclonal antibodies, polyclonal antibodies, antibody fragments, nucleic acids, oligonucleotides, proteins, oligopeptides, polysaccharides, sugars, peptides, peptide encoding nucleic acid molecules, antigens, drugs and other ligands. Examples of suitable affinity ligands are available in the published literature and are well known. The use of further binding partners, secondary affinity ligands and linking groups which is routine in the art will not be discussed further herein although it will be appreciated that the use of such species with the particles of the invention is possible if desired.

In an especially preferred embodiment, the particle coating is prepared using an epoxide compound having a functional group copolymerizable with an acrylate, e.g. a carbon-carbon double bond, for example using two or three epoxides one of which contains an unsaturated carbon-carbon bond. The coated particles may then be functionalized by reaction with a vinyl or acrylic monomer carrying a functional group, for example a carboxylic acid group (e.g. using acrylic acid). Further functionalization may then readily be achieved by reaction of the pendant carboxyl groups, e.g. by reaction with N-hydroxysuccinimide or with streptavidin.

Viewed from a further aspect the invention provides the use of particles of the invention in syntheses, extractions or assays, in particular in nucleic acid detection.

Epoxides of use in this aspect include glycidylmethacrylate and allylglycidylether.

Introduction of vinyl groups polymerisable with, for example, an acrylic acid can also be achieved by reacting the coating surface with a compound such as methacrylic anhydride. For example, a coated particle comprising a coating formed from the reaction of two epoxides which is washed (e.g. in NaOH) to expose hydroxyl functionalities would react readily with methyl acrylic anhydride to allow the introduction of vinyl groups to the polymer surface.

As mentioned above, the nature of the external substance coupled to the particles may be selected on the basis of its ability to bind to a particular target material. Nucleic acid detection generally involves probing a sample thought to contain target nucleic acids using a nucleic acid probe that contains a nucleic acid sequence that specifically recognises, e.g. hybridises with, the sequence of the target nucleic acids, such that the nucleic acid affinity ligand and the target nucleic acids in combination create a hybridisation layer. Suitably functionalised particles of the invention, e.g. those coated with at least two epoxides and carrying a carboxyl group subsequently reacted with streptavidin, are ideally suited for nucleic acid detection.

Biotinylated single strand oligonucleotide probes bound to streptavidin beads can be used to isolate sequence specific DNA. The biotinylated probes are bound to the beads by mixing the appropriate amount of beads with an excess of biotinylated probe. The beads/probe are then incubated with the DNA sample in a hybridisation buffer, e.g. SSPE or SSC, under conditions appropriate for the length and sequence of the probe and DNA. The excess and unwanted DNA is washed away utilizing the magnetic properties of the beads. The captured DNA can be detected/quantified by PCR etc.

Biotinylated double strand DNA fragments bound to streptavidin beads can be used to isolate DNA sequence specific binding proteins. The biotinylated DNA is bound to the beads by mixing the appropriate amount of beads with an excess of biotinylated DNA fragments. The beads/DNA are then incubated with the protein sample in a hybridisation buffer, under conditions appropriate for the protein under investigation. The excess and unwanted protein is washed away utilizing the magnetic properties of the beads. The captured protein can be eluted from the probe (by high salt, low salt, heat, low pH etc) for downstream applications and detection.

The target material may optionally be a material of biological or synthetic origin, e.g. it may be a molecule or a group of molecules, including for example antibodies, amino acids, proteins, peptides, polypeptides, enzymes, enzyme substrates, hormones, lymphokines, metabolites, antigens, haptens, lectins, avidin, streptavidin, toxins, poisons, environmental pollutants, carbohydrates, oligosaccharides, polysaccharides, glycoproteins, glycolipids, nucleotides, oligonucleotides, nucleic acids and derivatised nucleic acids, DNA, RNA, natural or synthetic drugs, receptors, virus particles, bacterial particles virus components, cells, cellular components, natural or synthetic lipid vesicles, polymer membranes, polymer services and particles and glass and plastic surfaces.

Where the beads of the invention are to be employed in immunoassays it has surprisingly been found that tosylation of the particles after coating results in particles which exhibit improved performance in immunoassays. Thus, in a preferred embodiment, particles carrying a coating can be tosylated, e.g. by reaction of the particles with tosylchloride in the presence of a base. The resulting tosylated coated particles are new and form a further aspect of the invention. By tosyl is meant a toluene-4-sulphonyl group.

Moreover, such tosylated species can be readily reacted with affinity ligands, e.g. streptavidin to form still further new particles.

Viewed from another aspect, the invention provides coated polymeric particles, optionally carrying superparamagnetic crystals, having a coating formed from at least one epoxide, which is subsequently tosylated, e.g. by reaction with tosyl chloride, and optionally then reacted with an affinity ligand, e.g. streptavidin.

Moreover, it has surprisingly been found that particles of the diameters claimed herein have a greatly increased capacity for binding compared to beads of greater size, e.g. 3 $\mu$m beads. It is envisaged that the binding capacity of the claimed beads is over 200% greater than that of larger beads allowing the use of considerably lower amounts particles in an assay procedure.

The beads of the invention are therefore of utility in adsorption/desorption processes analogously to the mechanisms in Reversed Phase chromatography or hydrophobic interaction chromatography. Reversed phase chromatography is a separation technique that utilises a hydrophobic adsorption interaction between a solute molecule (e.g. a protein) and an immobilised hydrophobic ligand (e.g. the surface of beads). This interaction is usually so strong that it can occur in solutions of low ionic strength and is broken by the use of organic solvents (e.g. acetonitrile). Reversed phase chromatography can be used to fractionate complex protein samples and for desalting protein samples. RPC is usually performed using a solid phase packed in to a column. The beads of the invention enable the technique to be performed without a column, without sample dilution and to be automated with high throughput.

Hydrophobic interaction chromatography (HIC) is a separation technique that utilises a hydrophobic adsorption interaction between a solute molecule (e.g. a protein) and an immobilised hydrophobic ligand (e.g. the surface of beads). This interaction is weaker than the interactions utilised during RPC and requires promotion by high salt concentrations. Consequently, decreasing salt concentrations can be used to break these adsorption interactions. HIC can be used to fractionate complex protein samples and for desalting protein samples. HIC is usually performed using a solid phase packed in to a column. The beads of the invention enable the technique to be performed without a column, without sample dilution and to be automated with high throughput.

The invention will now be described further by reference to the following examples. These are not intended to be limitative but merely exemplary of the invention.

Example 5 relates to coated polymer particles outside the scope of the Invention. Examples 6, 7, 8, 15, 16 and 17 refer back directly or indirectly to Example 5 and therefore also fall outside the scope of the invention. All these examples (5-8, 15, 16 and 17) are retained as they serve to illustrate chemistry applicable to the claimed invention.

## Example 1

### Preparation of 0.3 $\mu$m seed particles

1600 g styrene was extracted with 2 L 10 wt.% sodium hydroxide, washed with water to pH 7 and then flushed with argon for 10 min. In a 10L reactor, 8000 g of water and 3.07 g of borax were heated to 80°C, and 100 g of water was evaporated off to remove oxygen. Then 19.97 g sodium decyl sulphate in 200 ml boiled water was charged and stirred for 10 min. Then the washed and substantially oxygen-free styrene was charged and stirred for 15 min. Then 4.80 g potassium peroxodisulphate was charged in 200 g boiled water. The mixture was kept at 80°C in an argon atmosphere for 13 hours. A monodisperse suspension of polymer particles was formed having a particle diameter of 0.3 $\mu$m.

## Example 2

### Preparation of 1.0 $\mu$m polystyrene particles

8860 g of water, 866 g DOP (dioctanoyl peroxide), 433 g acetone and 51.96 g of SDS were homogenized for 25 minutes in a two stage Manton Gaulin homogenizer at 400 kg/cm$^2$ in the first stage and 100 kg/cm$^2$ in the second stage. After homogenization, 5164 g of the emulsion were charged with a seed suspension of monodisperse polystyrene particles having a diameter of 0.3 $\mu$m from Example 1. 1891 g of seed suspension containing 297.8 g of polymeric particles and 1593 g of water was used.

After stirring for 24 hours at 25°C, 6414 g of the activated seed particle suspension were charged with an emulsion containing 103400 g of water, 131 g of SDS (sodium dodecyl sulphate), 1556 g of polyvinylpyrrolidone K-30, 4157 g of 63.2% divinylbenzene, 1060 g styrene and 11606 g of toluene (as a porogen). The emulsion was homogenized for 25 mins at 400 kg/cm$^2$ in the first stage and 100 kg/cm$^2$ in the second stage.

After swelling for 2 hours at 25°C, 46676 g of water were charged to the reactor and then the dispersion was polymerized for 1 hour at 60°C and 20 hours at 70°C. A monodisperse suspension was formed having a particle diameter of 1.0 $\mu$m.

The particles were washed with methanol and butylacetate and dried. By BET the specific surface area was determined to be 570 m$^2$/g dry substance.

## Example 3

### Nitration

A mixture of 9920 g 95% sulphuric acid and 3020 g 65% nitric acid was cooled to 10°C and then 400 g 1.0 $\mu$m dry porous crosslinked polystyrene particles from Example 2 were charged. The temperature was raised to 30°C for 1 hour 30 min. The suspension was charged with 60L ice and water. The particles were washed with water and methanol by filtration. The resulting particles contained 9.0 wt.% nitrogen.

### Example 4

Incorporation of iron

2579 g $FeSO_4.7H_2O$ and 3.2 g $MnSO_4.H_2O$ were added to a suspension of 4144 g nitrated porous particles from Example 3 containing 450 g of particles and 3694 g of water. The suspension was stirred at room temperature for 30 min. 3285 g of 25% NH, in water was added. The temperature was raised to 60°C for 2 hours. The suspension was cooled and the particles were washed with water by centrifugation. After purification the particles were transferred to methanol. Analysis of the particles showed a content of 330 mg Fe/g DS (dry substance) and 0.9 mg Mn/g DS.

### Example 5

Coating

133 g of a methanol suspension containing 13,3 g of 1,0 $\mu$m styrene-divinylbenzene polymer particles surface functionalized by nitration and reduction and containing superparamagnetic iron oxide (33 wt% Fe) were washed five times with 93 g diglyme. Dry substance of particles in diglyme was adjusted to 15 wt% and glycidol (3,07 g), 1,4-butanedioldiglycidylether (Araldite DY-026, 8,06 g) and glycidylmethacrylate (5,68 g) was added to the particles. The mixture was heated to 75°C and stirred for 20 hours. The particles were then washed six times with 70 g methanol and four times with 80 g of isopropanol.

### Example 6

Functionalisation with carboxylic acid groups

To 1806 g of a suspension of the particles prepared in Example 5 (425 g) in isopropanol was added methanol (774 g), acrylic acid (514 g) and 2,2'-azoisobutyronitrile (23.4 g). The mixture was heated to 73-75°C and stirred for 20 hours. The particles were then washed six times with 2338 g methanol and once with 3018 g of 0.15 M NAOH. The particle content (dry substance basis) was adjusted to 12 wt.% and the mixture was heated to 75°C and stirred for 3.5 hours. The particles were washed three times with 3188 g water and five times with 3188 g 0.01 M NaOH.
47 g of a suspension of the particles prepared in Step (A) (13,3 g) in isopropanol was added methanol (24 g), acrylic acid (9,64 g) and 2,2'-azoisobutyronitrile (0,41 g). The mixture was heated to 73-75°C and stirred for 20 hours. The particles were then washed six times with 73 g methanol and once with 94 g of 0,15 M NaOH. Dry substance of the mixture of particles and 0,15 M NaOH was adjusted to 12 wt% and the mixture was heated to 75 °C and stirred for 3,5 hours. The particles was washed with three times with 99 g water and five times with 99 g 0,01 M NaOH.

### Example 7

Functionalisation of carboxylic acid groups to N-hydroxysuccinimide ester

50 g of a suspension of 5.0 g of the particles of Example 6 were acidified by washing with 0.1.M acetic acid (3 x 50 mL). The acidified particles (which had a carboxylic acid content of 0.5 mmole/g DS) were then washed with acetone (4 x 50 mL) and concentrated on a magnet. Extra acetone was added until a total of 35.6 g suspension was achieved. N-hydroxysuccinimide (2.90 g, 25 mmole) and diisopropylcarbodiimide (3.16 g, 25 mmole) were then added. The reaction mixture was stirred at room temperature for 5 hours. The particles were then washed with acetone (5 x 50 mL).

### Example 8

Immobilisation of streptavidin

1. 20 mg of carboxylic acid functionalised beads of Example 6 were dispersed in 1 ml 0.01 M NaOH.
2. The beads were separated on a magnet and the supernatant discharged.
3. The beads were washed three times with 1 ml 30 mM 2-morpholino-ethanesulfonic acid (MES) pH 6.1.
4. 1.8 mg streptavidin dissolved in 900 $\mu$l 30 mM MES pH 6.1 was added to the beads.
5. The beads and streptavidin were incubated on mixing device at room temperature for 15 minutes.
6. 3 mg 1-ethyl-3-(3-dimethylaminopropyl)carbodiimide (EDC) dissolved in 75 $\mu$l cold distilled water was added.

7. The mixture was incubated on a mixing device at room temperature for one hour.

8. The beads were washed three times with Phosphate buffered saline (PBS) pH 7.4 with 0.01 % (w/v) Tween 20 in order to remove excess streptavidin and EDC.

9. The beads were resuspended in PBS pH 7.4 with 0.1 % Tween 20.

The amount of streptavidin was measured by use of tracer amounts of $I^{125}$-labelled streptavidin during coating. The relative amount of $I^{125}$-labelled streptavidin gives the amount of streptavidin coated to the surface.

Free biotin binding capacity was determined by addition of excess $C^{14}$-labelled biotin to the streptavidin coated beads. Excess biotin was washed away and the amount of $C^{14}$-biotin was measured using a beta-scintillation counter.

The amount of streptavidin coating was found to be 68 μg per mg beads, and the free biotin binding capacity was 3100 pmol free biotin per mg beads.

## Example 9

124,45 gram of a diglyme suspension of 20 g of 1,0 μm styrene-divinylbenzene polymer particles surface functionalized by nitration and reduction and containing superparamagnetic iron oxide (33 wt% Fe) (made analogously to Example 4) was added 2,2-Bis[4-(glycidyloxy)phenyl]propane (Bisphenol A diglyidylether, Araldit LY-564) (42 g). The mixture was heated to 60°C and stirred for 2 hours and the cooled to room temperature and stirred over night. The suspension was washed three times with diglyme and dry substance adjusted to 12%.

Glycidol (4,58 g), Araldite DY-026 (1,4-butanedioldiglycidylether) (12,1 g) and glycidylmethacrylate (8,57 g) were added. The mixture was heated at 75°C and stirred for 21 hours. The particle sususpension was cooled and the particles were washed six times with 100 g methanol and four times with 100 g of isopropanol.

## Example 10

90 g of a methanol suspension of 15 g of 1,0 μm styrene-divinylbenzene polymer particles surface functionalized by nitration and reduction and containing superparamagnetic iron oxide (33 wt% Fe) (made analogously to Example 4) was washed three times with 60 g diglyme and 2,2-Bis[4-(glycidyloxy)phenyl]propane (Bisphenol A diglyidylether, Araldit LY-564) (70,40 g) and 1,4-butanedioldiglycidylether (Araldit DY-026) (4,61 g) added. The mixture was heated at 95°C for 20 hours. The particles were cooled and washed three times with 100 g diglyme and three times with 100 g of methanol.

## Example 11

To 23,48 g of a diglyme suspension of 5 g of 1,0 μm styrene-divinylbenzene polymer particles surface functionalized by nitration and reduction and containing superparamagnetic iron oxide (33 wt% Fe) (made analogously to Example 4) was added 2,2-Bis[4-(glycidyloxy)phenyl]propane (Bisphenol A diglyidylether, Araldit LY-564) (23,47 g) and polyethyleneglycoldiglycidylether Mw~300 (3,07 g). The mixture was heated at 95°C for 20 hours. The particles were cooled and washed four times with 40 g of methanol.

## Example 12

To 24,46 g of a diglyme suspension of 5 g of 1,0 μm styrene-divinylbenzene polymer particles surface functionalized by nitration and reduction and containing superparamagnetic iron oxide (33 wt% Fe) (made analogously to Example 4) was added 2,2-Bis[4-(glycidyloxy)phenyl]propane (Bisphenol A diglyidylether, Araldit LY-564) (23,54 g) and polyethyleneglycoldiglycidylether Mw~500 (15,28 g). The mixture was heated at 95°C for 20 hours. The particles were cooled and washed five times with 40 g of methanol.

## Example 13

To 26,82 g of a diglyme suspension of 5 g of 1,0 μm styrene-divinylbenzene polymer particles surface functionalized by nitration and reduction and containing superparamagnetic iron oxide (33 wt% Fe) (made analogously to Example 4) was added 2,2-Bis[4-(glycidyloxy)phenyl]propane (Bisphenol A diglyidylether, Araldit LY-564) (46,93 g) and glycerolpropoxylate triglycidylether (69,98 g). The mixture was heated at 95°C for 20 hours. The particles were cooled and washed five times with 40 g of methanol.

### Example 14

Immobilization of streptavidin

20 mg of coated beads from Example 12 were dispersed in 1 ml 0,1 M Na-phosphate buffer pH 7.4. Beads were separated on a magnet and the supernatant discharged. This was repeated twice. 1 mg streptavidin dissolved in 900 ul 0,1 M Na-phosphate buffer pH 7.4 was added to the beads. Beads and streptavidin were incubated on a mixing device for 20 hours at room temperature. The beads were washed three times with PBS pH 7,4 with 0.1 % BSA.

The free biotin binding capacity was measured as described in example 20 and found to be 1900 pmol free biotin per mg beads.

### Example 15 Binding Capacity for biotinylated DNA molecules

1. Plasmid DNA fragments of 1090, 526, 217 base pairs were biotinylated and europium labelled by PCR.
2. The excess biotin and europium labels were removed by commercial PCR clean-up techniques and the labelled DNA quantified by optical density at 260nm and time resolved fluorescence.
3. Streptavidin coated beads (Example 8) were washed once in a 2 times concentrated binding buffer (2M NaCl, 20mM Tris HCl, 0.2M EDTA pH7.5).
4. 5 $\mu$g of the washed beads were resuspended in 100 $\mu$l of binding buffer in each well of a 96 well plate.
5. An excess of DNA (0.55 pmol of 1090bp, 1.1 pmol of 526bp and 2.2 pmol of 217bp) diluted in 100 $\mu$l of water was added to the beads and incubated with gentle shaking for 15-30 minutes at room temperature.
6. The plate is placed on the magnet and the supenatant removed.
7. The beads -DNA complex are washed 3 times with 200 $\mu$l of wash buffer (10 mM Tris-HCl pH7.8, 0.01% Tween 20).
8. The beads-DNA complex are resuspended in 200 $\mu$l DELFIA Enhancement solution and incubated, protected from light, with shaking at room temperature for 10 minutes.
9. The plate is placed on the magnet and the Enhancement solution is transferred to a FluorNunc 96 well plate and the europium signal is measured by time resolved fluorescent (Wallac Victor plate reader) and given as counts per second (cps).
10. The DNA bound to the beads is calculated from the percent of cps added in 0.55, 1.1 and 2.2 pmol of DNA, that has bound to the beads.

The binding capacity of the beads is approximately 200pmol/mg for the 217bp fragment, 80-100 pmol/mg for the 526bp fragment and 35-45 pmol/mg for the 1090 bp fragment.

### Example 16

Functionalisation with carboxylic acid groups

To 15,87g of a suspension of the particles prepared in Example 5 (2,5 g) in isopropanol was added acrylic acid (1,84 g), acrylamide (1,79 g), methanol (5,95 g) and 2,2'-azoisobutyronitrile (0,28 g). The mixture was heated to 75°C and stirred for 20 hours. The particles were then washed four times with 20 g isopropanol and 4 times with 25 g of 0,15 M NaOH.

### Example 17

Functionalisation with carboxylic acid groups

To 8,44 g of a suspension of the particles prepared Example 5 (1g) in water was added acrylic acid (0,37 g), allylglycidylether (1,34 g), dimethylsulfoxide (0,91 g) and 2,2'-azoisobutyronitrile (0,06 g). The mixture was heated to 75°C and stirred for 20 hours. The particles were then washed four times with 10 g isopropanol and 4 times with 10 g of 0,15 M NaOH.

**Example 18**

Immunoassay for Intact PTH,

Beads coated with streptavdin as in example 14 were used to analyse the content of intact PTH in samples of human EDTA plasma on a Liaison immunoassay instrument. 150 ul of EDTA plasma was incubated with a biotinylated polyclonal goat antibody raised against intact PTH, and an acridinium ester conjugated polyclonal goat antibody raised similarly to yield an immuncomplex. The streptavidin coated beads was added to the immuncomplex and incubated to allow the biotin to bind to the immobilized streptavidin. The beads were washed and the chemiluminescent signal developed and measured in the luminescence reader in the Liaison instrument.

**Example 15**

14,52 g of a diglyme suspension of 2,50 g of 1,0 $\mu$m styrene-divinylbenzene polymer particles surface functionalized by nitration and reduction and containing superparamagnetic iron oxide (33 wt% Fe) (made analogously to Example 4) was added 2,2-Bis[4-(glycidyloxy)phenyl]propane (Bisphenol A diglyidylether, Araldit LY-564) (13,03 g). The mixture was heated at 95°C for 20 hours. The particles were cooled and washed three times with 17 g of diglyme and five times with 17 g of methanol.

**Example 16**

Binding Capacity for biotinylated protein molecules

1. 5$\mu$g of the streptavidin beads (Ex 1) were washed once in DELFIA assay buffer and mixed with an excess of biotinylated antibody labelled with europium$^{3+}$ in a 96 well plate.
2. Incubation with mixing at room temperature was carried out for 20 minutes to allow the antibody to bind to the beads.
3. The plate was placed on the magnet and the supenatant removed.
4. The beads -antibody complex were washed 3 times with 200$\mu$l of DELFIA wash buffer
5. The beads-antibody complex were resuspended in 200$\mu$l DELFIA Enhancement solution and incubated, protected from light, with shaking at room temperature for 10 minutes.
6. The plate was placed on the magnet and the enhancement solution is transferred to a FluorNunc 96 well plate and the europium signal measured by time resolved fluorescent (Wallac Victor plate reader) and given as counts per second (cps).
7. The amount of antibody bound to the beads was calculated from the percent of cps added that has bound to the beads.

The binding capacity of the beads was approximately 8.0 $\mu$g biotinylated antibody per mg beads.

**Example 17**

Reversed Phase Chromatography (RPC)

The beads of example 10 were used to fractionate a protein mixture consisting of conalbumin, soya bean trypsin inhibitor, alcohol dehdrogenase, cytochrome C and diamine oxidase, or cell lysates from SW 480 cells. 1 mg of beads were pre-washed and resuspended in 10 ul of an RPC adsorption buffer (obtained from Bruker Daltonics or alternatively 50 mM sodium phosphate buffer, 1 M ammonium sulphate, 0.1 % trifluoroacetic acid) and incubated with 25 ug of the protein mixture or cell lysate for 1 minute. Following adsorption, the beads were washed three times with washing buffer (obtained from Bruker Daltonics or 50 mM sodium phosphate buffer, 1 M ammonium sulphate, 0.1 % trifluoroacetic acid) and the proteins subsequently desorbed in fractions by the use of desorption buffers containing increasing concentrations of acetonitrile (0, 15, 30, 40 & 50 %).

**Claims**

1.  A process for the preparation of coated polymer particles containing superparamagnetic crystals, said process comprising reacting porous, surface-functionalized, superparamagnetic crystal-containing polymer particles of diameter 0.5 to 1.8 μm with at least one epoxide compound, the surface functionality on the polymer being a group capable, optionally with activation, of reacting with an epoxide to covalently bond the epoxide to the surface and the process using an epoxide containing at least one ether link and a phenyl or bisphenyl group.

2.  A process as claimed in claim 1 wherein the particles are reacted with a mixture of epoxides.

3.  A process as claimed in claim 2 wherein the particles are reacted with 2, 3 or 4 epoxides.

4.  A process as claimed in claim 2 or claim 3 wherein the epoxides comprise at least one diepoxide.

5.  A process as claimed in any of claims 1 to 3 which comprises reacting the polymer particles with at least one diepoxide which contains at least one ether link and a phenyl or bisphenyl group.

6.  A process as claimed in claim 5, wherein as epoxide there is used 2,2-bis-(4-(2,3-epoxypropoxy)phenyl)-propane.

7.  A process as claimed in any of claims 4 to 6 comprising reacting the polymer particles with a combination of two diepoxides or of a monoepoxide and a diepoxide, wherein the epoxides contain at least one ether link and a phenyl or bisphenyl group.

8.  A process as claimed in claim 1 wherein at least two epoxide compounds are used and said at least two epoxide compounds comprise at least one bisepoxide compound.

9.  A process as claimed in claim 8 wherein said epoxide compounds comprise 1,4-bis-(2,3-epoxypropoxy) butane and 2,2-bis(4-(2,3-epoxypropoxy)phenyl)-propane.

10. A process of any preceding claim, wherein the polymer particles are made from a combination of vinylic polymers.

11. A process as claimed in claim 10, wherein the polymer particles are made from a combination of styrenes, acrylates and/or methacrylates.

12. A process as claimed in any preceding claim wherein the polymeric material incorporates a cross-linking agent.

13. A process as claimed in claim 12 wherein said cross-linking agent is divinylbenzene.

14. A process as claimed in any preceding claim wherein the particle surfaces are amine functionalised.

15. A process as claimed in any preceding claim wherein said porous surface-functionalized polymer particles are nitrated and reduced styrene-divinylbenzene polymer particles.

16. A process as claimed in any preceding claim wherein the diameter of the polymer particles is between 0.5 to 1.2 μm.

17. A process as claimed in claim 16 wherein the diameter of the polymer particles is about 1 μm.

18. A process as claimed in any preceding claim in which said coated particles are subsequently tosylated.

19. A process as claimed in any preceding claim wherein subsequent to the coating reaction, said particles are coupled to a drug molecule, reporter moiety or ligand.

20. A process as claimed in claim 19 wherein said ligand is a monoclonal antibody, polyclonal antibody, antibody fragment, nucleic acid, oligonucleotide, protein, oligopeptide, polysaccharide, sugar, peptide, peptide encoding nucleic acid molecule, antigen or drug.

21. A process as claimed in claim 20 wherein said ligand is streptavidin.

22. A particle obtainable by the process of any of claims 1 to 21.

23. Use of a particle as claimed in claim 22 in an assay, in hydrophobic interaction chromatography or reversed phase chromatography.

**24.** Use as claimed in claim 23 wherein said assay is for the detection of nucleic acid or is an immunoassay.

**Patentansprüche**

**1.** Ein Prozess für die Vorbereitung von beschichteten Polymerpartikeln, die superparamagnetische Kristalle enthalten, wobei der Prozess das in Reaktion bringen von porösen, oberflächenfunktionalisierten, superparamagnetische Kristalle enthaltenden Polymerpartikeln mit einem Durchmesser von 0,5 bis 1,8 μm mit mindestens einer Epoxid-verbindung umfasst, und wobei die Oberflächenfunktionalität auf dem Polymer eine Gruppe ist, die optional mit Aktivierung fähig ist, mit einem Epoxid zu reagieren, um das Epoxid kovalent an die Oberfläche zu binden, und wobei der Prozess ein Epoxid verwendet, das mindestens eine Ätherbindung und eine Phenyl- oder Bisphenyl-Gruppe umfasst.

**2.** Prozess nach Anspruch 1, wobei die Partikel mit einem Gemisch von Epoxiden in Reaktion gebracht werden.

**3.** Prozess nach Anspruch 2, wobei die Partikel mit 2, 3 oder 4 Epoxiden in Reaktion gebracht werden.

**4.** Prozess nach Anspruch 2 oder Anspruch 3, wobei die Epoxide mindestens ein Diepoxid enthalten.

**5.** Prozess nach irgendeinem der Ansprüche 1 bis 3, der das in Reaktion bringen der Polymerpartikel mit mindestens einem Diepoxid umfasst, das mindestens eine Ätherbindung und eine Phenyl- oder Bisphenyl-Gruppe enthält.

**6.** Prozess nach Anspruch 5, wobei als Epoxid 2,2-bis-(4-(2,3-Epoxypropoxy)phenyl)-Propan verwendet wird.

**7.** Prozess nach irgendeinem der Ansprüche 4 bis 6, umfassend das in Reaktion Bringen der Polymerpartikel mit einer Kombination von zwei Diepoxiden oder einem Monoepoxid und einem Diepoxid, wobei die Epoxide mindestens eine Ätherbindung und eine Phenyl- oder Bisphenyl-Gruppe enthalten.

**8.** Prozess nach Anspruch 1, wobei mindestens zwei Epoxidverbindungen verwendet werden und die mindestens zwei Epoxidverbindungen mindestens eine Bisepoxid-Verbindung enthalten.

**9.** Prozess nach Anspruch 8, wobei die Epoxidverbindungen 1,4-bis-(2,3-Epoxypropoxy)-Butan und 2,2-bis (4-(2,3-Epoxypropoxy)phenyl)-Propan enthalten.

**10.** Prozess von irgendeinem der vorausgehenden Ansprüche, wobei die Polymerpartikel aus einer Kombination von Vinylpolymeren hergestellt sind.

**11.** Prozess nach Anspruch 10, wobei die Polymerpartikel aus einer Kombination von Styrolen, Acrylaten und/oder Methacrylaten hergestellt werden.

**12.** Prozess nach irgendeinem vorausgehenden Anspruch, wobei das Polymermaterial einen Vernetzer integriert.

**13.** Prozess nach Anspruch 12, wobei der Vernetzer Divinylbenzol ist.

**14.** Prozess nach irgendeinem vorausgehenden Anspruch, wobei die Partikeloberflächen aminfunktionalisiert sind.

**15.** Prozess nach irgendeinem vorausgehenden Anspruch, wobei die porösen oberflächenfunktionalisierten Polymerpartikel nitrierte und reduzierte Styrol-Divinylbenzol-Polymerpartikel sind.

**16.** Prozess nach irgendeinem vorausgehenden Anspruch, wobei der Durchmesser der Polymerpartikel zwischen 0,5 und 1,2 μm beträgt.

**17.** Prozess nach Anspruch 16, wobei der Durchmesser der Polymerpartikel ungefähr 1 μm beträgt.

**18.** Prozess nach irgendeinem vorausgehenden Anspruch, in dem die beschichteten Teilchen anschließend tosyliert werden.

**19.** Prozess nach irgendeinem vorausgehenden Anspruch, wobei folgend auf die Beschichtungsreaktion die Partikel mit einem Wirkstoffmolekül, einer Reportereinheit oder einem Liganden gekoppelt werden.

**20.** Prozess nach Anspruch 19, wobei der Ligand ein monoklonaler Antikörper, polyklonaler Antikörper, Antikörperfragment, Nukleinsäure, Oligonukleotid, Protein, Oligopeptid, Polysaccharid, Zucker, Peptid, peptid-codierende Nukleinsäuremolekül, Antigen oder Medikament ist.

**21.** Prozess nach Anspruch 20, wobei der Ligand Streptavidin ist.

**22.** Ein Partikel, der durch den Prozess von irgendeinem der Ansprüche 1 bis 21 zu erlangen ist.

**23.** Verwendung eines Partikels nach Anspruch 22 in einem Assay, in der hydrophoben Interaktionschromatographie oder Umkehrphasenchromatographie.

**24.** Verwendung nach Anspruch 23, wobei das Assay zur Erkennung von Nukleinsäure dient oder ein Immunoassay ist.

**Revendications**

**1.** Procédé permettant la préparation de particules polymères revêtues qui contiennent des cristaux superparamagnétiques, ledit procédé consistant à faire réagir les particules polymères poreuses fonctionnalisées en surface qui contiennent des cristaux superparamagnétiques et présentent un diamètre compris entre 0,5 et 1,8 μm, avec au moins un composé époxyde, la fonctionnalité de surface sur le polymère étant un groupe qui peut, facultativement avec une activation, réagir avec un époxyde pour lier de façon covalente l'époxyde à la surface, et le procédé utilisant un époxyde qui contient au moins une liaison éther et un groupe phényle ou bisphényle.

**2.** Procédé selon la revendication 1, dans lequel les particules sont mises en réaction avec un mélange d'époxydes.

**3.** Procédé selon la revendication 2, dans lequel les particules sont mises en réaction avec 2, 3 ou 4 époxydes.

**4.** Procédé selon la revendication 2 ou la revendication 3, dans lequel les époxydes comprennent au moins un diépoxyde.

**5.** Procédé selon l'une quelconque des revendications 1 à 3, qui consiste à faire réagir les particules polymères avec au moins un diépoxyde qui contient au moins une liaison éther et un groupe phényle ou bisphényle.

**6.** Procédé selon la revendication 5, dans lequel on utilise le 2,2-bis-(4-(2,3-époxypropoxy)phényl)-propane comme époxyde groupe phényle ou bisphényle.

**7.** Procédé selon l'une quelconque des revendications 4 à 6, qui consiste à faire réagir les particules polymères avec au moins un diépoxyde qui contient au moins une liaison éther et un groupe phényle ou bisphényle.

**8.** Procédé selon la revendication 1, dans lequel au moins deux composés époxydes sont utilisés et lesdits au moins deux composés époxydes comprennent au moins un composé bisépoxyde.

**9.** Procédé selon la revendication 8, dans lequel lesdits composés époxydes comprennent le 1,4-bis-(2,3-époxypropoxy)butane et le 2,2-bis-(4-(2,3-époxypropoxy)phényl)-propane.

**10.** Procédé selon l'une quelconque des revendications précédentes, dans lequel les particules polymères sont fabriquées à partir d'une combinaison de polymères vinyliques.

**11.** Procédé selon la revendication 10, dans lequel les particules polymères sont fabriquées à partir d'une combinaison de styrènes, d'acrylates et/ou de méthacrylates.

**12.** Procédé selon l'une quelconque des revendications précédentes, dans lequel le matériau polymère incorpore un agent de réticulation.

**13.** Procédé selon la revendication 12, dans lequel ledit agent de réticulation est le divinylbenzène.

**14.** Procédé selon l'une quelconque des revendications précédentes, dans lequel les surfaces des particules sont fonctionnalisées avec une amine.

**15.** Procédé selon l'une quelconque des revendications précédentes, dans lequel lesdites particules polymères poreuses fonctionnalisées en surface sont des particules polymères de styrène - divinylbenzène nitrées et réduites.

**16.** Procédé selon l'une quelconque des revendications précédentes, dans lequel le diamètre des particules polymères varie entre 0,5 et 1,2 $\mu$m.

**17.** Procédé selon la revendication 16, dans lequel le diamètre des particules polymères fait environ 1 $\mu$m.

**18.** Procédé selon l'une quelconque des revendications précédentes, dans lequel lesdites particules revêtues sont par la suite tosylées.

**19.** Procédé selon l'une quelconque des revendications précédentes, dans lequel, après la réaction de revêtement, lesdites particules sont couplées à une molécule de médicament, une fraction rapporteuse ou un ligand.

**20.** Procédé selon la revendication 19, dans lequel ledit ligand est un anticorps monoclonal, un anticorps polyclonal, un fragment d'anticorps, un acide nucléique, un oligonucléotide, une protéine, un oligopeptide, un polysaccharide, un sucre, un peptide, une molécule d'acide nucléique codant les peptides, un antigène ou un médicament.

**21.** Procédé selon la revendication 20, dans lequel ledit ligand est la streptavidine.

**22.** Particule qui peut être obtenue par le procédé selon l'une quelconque des revendications 1 à 21.

**23.** Utilisation d'une particule selon la revendication 22 dans une analyse, une chromatographie par interaction hydrophobe ou une chromatographie en phase inverse.

**24.** Utilisation selon la revendication 23, dans laquelle ladite analyse est destinée à la détection de l'acide nucléique ou est une immunoanalyse.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4654267 A
- US 5091206 A
- US 6133047 A
- WO 2004053490 A
- US 20020169293 A
- US 654267 A
- WO 9919375 A
- WO 0061648 A
- WO 0170825 A
- WO 0061647 A